**Europäisches Patentamt**

**European Patent Office**

**Office européen des brevets**

(11) Publication number : **0 343 117 B1**

# (12) EUROPEAN PATENT SPECIFICATION

(45) Date of publication of patent specification :
**16.12.92 Bulletin 92/51**

(51) Int. Cl.⁵ : **B60K 26/02, G05G 1/14**

(21) Application number : **89830143.7**

(22) Date of filing : **04.04.89**

(54) **An accelerator, particularly for commercial vehicles.**

(30) Priority : **16.05.88 IT 6745288**

(43) Date of publication of application :
**23.11.89 Bulletin 89/47**

(45) Publication of the grant of the patent :
**16.12.92 Bulletin 92/51**

(84) Designated Contracting States :
**DE ES FR GB IT NL SE**

(56) References cited :
**FR-A- 2 339 205**
**GB-A- 2 102 103**
**US-A- 1 983 368**

(56) References cited :
**US-A- 4 351 198**
**THE REVIEW OF SCIENTIFIC INSTRUMENTS, vol. 20, no. 4, April 1949, page 324; O. RE-TZLOFF: "A flexible vacuum seal"**

(73) Proprietor : **IVECO FIAT S.p.A.**
**Via Puglia 35**
**I-10156 Torino (IT)**

(72) Inventor : **Riva, Vittorio**
**Via Onorato Castellino, 11**
**I-10141 Torino (IT)**

(74) Representative : **Quinterno, Giuseppe et al**
**c/o Jacobacci-Casetta & Perani S.p.A. Via Alfieri, 17**
**I-10121 Torino (IT)**

Jouve, 18, rue Saint-Denis, 75001 PARIS

## Description

The present invention relates to an accelerator control device, particularly for commercial vehicles, of the type set forth in the pre-characterising portion of Claim 1.

Pedal control devices are known from US-A-4 351 198 and GB-A-2 102 103.

US-A-4 351 198 discloses a foot cable controlled throttle in which the pedal is pivotally mounted in the firewall of a motor vehicle. The installation of such a pedal is not easy since it is necessary to mount the pedal in the firewall and to link the pedal to a push rod.

GB-A-2 102 103 discloses a pedal control unit which can be assembled and subsequently fixed to the vehicle, working from the inside thereof. The unit presents a flexible bellows-type boot fitted between the pedal and the housing in which the lever system is contained. The flexible boot may tear and moreover the pedal is linked to the wire through a quite complex lever system having at least three different joints.

The object of the present invention is to provide a reliable accelerator control which has improved functional characteristics and can be installed more easily in the vehicle, working from the outside thereof.

According to the invention, this object is achieved by virtue of the features stated in the characterising portion of Claim 1.

By virtue of these characteristics, the exposure of the members constituting the device to external agents is avoided. Moreover, it is possible to preassemble the device on the bench and subsequently fix it to the cab of the vehicle, working from the outside thereof, thus achieving a reduction in the time required for installation on the vehicle.

Further characteristics and advantages of the device according to the invention will become clear from the detailed description which follows with reference to the appended drawings, provided by way of non-limiting example, in which:

Figure 1 is a sectioned side view of a device according to the invention, and

Figure 2 is a frontal view of the device of Figure 1 without the closure cover.

With reference to the drawings, an accelerator control device, indicated 10 is adapted for installation in a commercial vehicle, the cab floor of which is indicated P.

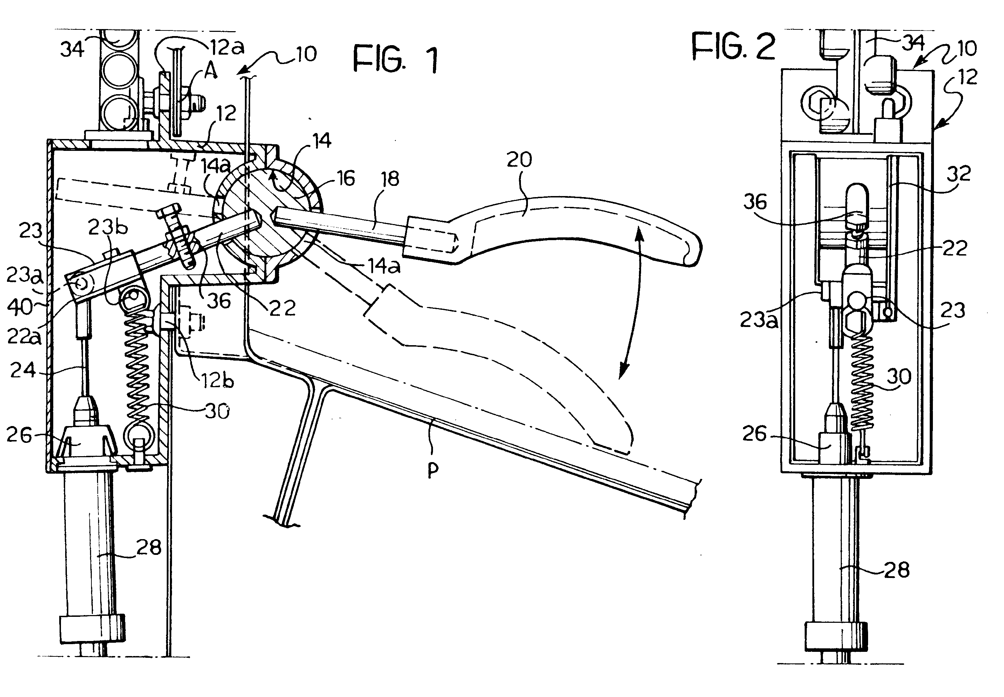

The device 10 includes an L-shaped hollow body 12 provided with a front closure cover 40 . The hollow body 12 has a flange 12a and a hole 12b for its mounting on the body of the vehicle. The wall of the hollow body 12 has therein a cylindrical seat 14 with a horizontal axis, in which a roller-like cylindrical element 16 of self lubricating material is rotatably mounted. A first rod 18 is fixed radially to the roller 16 and terminates in a pedal 20. A second rod 22 is fixed radially in a similar manner to the first rod 18 and is situated within the hollow body 12. The cylindrical seat 14 has radial openings 14a for enabling the rods 18 and 22 to rotate from the position shown in continuous outline (Figure 1) to the position indicated in broken outline. Alternatively, it is possible to use a single rod which passes through the roller 16.

The second rod 22 has an end 22a to which is fixed a bush 23 provided with first and second appendages 23a and 23b respectively. The end of an accelerator-operating cable 24 which slides in a sealing ring 26 and cooperates with an extra travel spring 28 positioned outside the hollow body 12 is connected to the first appendage 23a of the bush 23. The end of a return spring 30 interposed between the rod 22 and the wall of the hollow body 12 is connected to the second appendage 23b of the bush 23.

As illustrated in Figure 2, an auxiliary cable 32 for the manual control of the accelerator leads to the bush 23 of the rod 22; moreover, a so-called kick-down valve 34 for use if the vehicle has an automatic gearbox is situated above the hollow body 12 and is operated in known manner by the rod 22.

The adjustment of the travel-limit position of the pedal 20 is achieved by means of a travel-limit screw 36 screwed into the rod 22 and cooperating with the wall of the hollow body 12.

It is clear that the device 10 may easily be preassembled and subsequently installed in the vehicle by means of a few simple operations. It is also clear that the particular shape of the hollow body, as well as of the roller pivot 16 of the control pedal, ensures that the hollow body 12 is watertight, thus enabling safe and reliable operation despite the fact that the hollow body 12 is situated outside the driver's cab of the vehicle.

## Claims

1. An accelerator control device, particularly for commercial vehicles, of the type including a shank (18,22), one end of which supports a pedal (20) and the other end of which is connected to an operating cable, including:
   - a pedal support in the form of a hollow body (12, 40) adapted to be fixed to the structure (P) of the vehicle,
   - a roller pivot (16) which is supported rotatably in a cylindrical seat (14) of the hollow body and to which the shank (18, 22) is fixed, and
   - means (36) for adjustment of the travel-limit position of the pedal (20), housed within the hollow body (12) which is substantially sealed against infiltration, the operating cable (24) emerging from the hollow body (12),
   characterised in that:
      - the control device is adapted to be preassembled before mounting to the vehicle structure (P) from the outside thereof,
- the shank (18, 22) of the pedal (20) is fixed radially to the roller pivot (16), and
- the roller pivot (16) is of self lubricating material.

2. A device according to Claim 1, characterised in that a return spring (30) is interposed between one end (22) of the shank (18, 22) which is situated within the hollow body (12) and the wall of the latter.


**Patentansprüche**

1. Eine Gaspedaleinrichtung, insbesondere für kommerzielle Fahrzeuge, der Ausführung, die einen Schaft (18,22) aufweist, dessen eines Ende ein Pedal (20) trägt und dessen anderes Ende mit einem Betätigungskabel verbunden ist, mit:
    - einer Pedalhalterung in Form eines Hohlkörpers (12,40), der zur Befestigung am Aufbau (P) des Fahrzeugs ausgebildet ist,
    - einem Drehzapfen (16), der drehbar in einem zylindrischen Lager (14) des Hohlkörpers abgestützt und an welchem der Schaft (18,22) befestigt ist, und
    - einer Einrichtung (36) zum Einstellen der Bewegungs-Endposition des Pedals (20), die innerhalb des Hohlkörpers (12) untergebracht ist, welcher weitgehend gegen Infiltration abgedichtet ist, wobei das Betätigungskabel (24) aus dem Hohlkörper (12) austritt,
    dadurch gekennzeichnet, daß
    - die Gaspedaleinrichtung zur Vormontage vor dem Befestigen am Fahrzeugaufbau (P) von außerhalb desselben ausgebildet ist,
    - der Schaft (18,22) des Pedals (20) radial am Drehzapfen (16) befestigt ist, und
    - der Drehzapfen (16) aus selbstschmierendem Material besteht.

2. Eine Einrichtung nach Anspruch 1, dadurch gekennzeichnet, daß eine Rückzugsfeder (30) zwischen einem Ende (22) des Schaftes (18,22), das innerhalb des Hohlkörpers (12) angeordnet ist, und der Wandung des letzteren angebracht ist.


**Revendications**

1. Dispositif de commande d'accélérateur, en particulier pour des véhicules utilitaires, du type comprenant une tige (18, 22) dont une extrémité supporte une pédale (20), et dont l'autre extrémité est reliée à un câble fonctionnel, comprenant:
    - un support de pédale présentant la forme d'un corps creux (12, 40) adapté pour être fixé à la structure (P) du véhicule,
    - un pivot à rouleau (16) qui est supporté à rotation dans un siège cylindrique (14) du corps creux, et auquel est fixée la tige (18, 22), et
    - un moyen (36) servant à ajuster la position de fin de course de la pédale (20), logée dans le corps creux (12) rendu pratiquement étanche à l'infiltration, le câble fonctionnel (24) sortant du corps creux (12),
    caractérisé en ce:
        - le dispositif de commande est adapté pour être préassemblé avant d'être monté sur la structure de véhicule (P), depuis l'extérieur de cette cette dernière,
        - la tige (18, 22) de la pédale (20) est fixée radialement au pivot à rouleau (16), et
        - le pivot à rouleau (16) est un matériau autolubrifiant.

2. Dispositif selon la revendication 1, caractérisé en ce qu'un ressort de rappel (30), situé à l'intérieur du corps creux (12), est interposé entre une extrémité (22) de la tige (18, 22) et la paroi de ce corps creux (12).

FIG. 1

FIG. 2

34

12a

A

10

12

14

14a

16

18

20

23

23b

23a

40

22a

24

26

28

36

22

12b

30

P

14a

34

10

12

32

36

22

23a

23

30

26

28

EP 0 343 117 B1